# EUROPÄISCHE PATENTANMELDUNG

(11) **EP 3 360 822 A1**
(43) Veröffentlichungstag der Anmeldung: **15.08.2018**
(21) Anmeldenummer: 18162820.7
(22) Anmeldetag: 27.05.2014
(51) Int. Cl.: B65D 85/804

(54) **PORTIONSKAPSEL MIT EINEM FLÜSSIGKEITSVERTEILER**

(30) Priorität: 29.05.2013 DE 102013210031; 12.12.2013 DE 102013225779; 22.01.2014 DE 102014100689
(62) Teilanmeldung aus: 14726973.2
(71) Anmelder: K-fee System GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Kutzenberger Wolff & Partner

(57) **Zusammenfassung**

Die vorliegende Erfindung betrifft eine Portionskapsel mit einem Kapselkörper, dessen Wandung und Boden einen Innenraum begrenzen, in dem eine Getränke-/Lebensmittelsubstanz vorgesehen ist, die durch eine Flüssigkeit, die in die Portionskapsel eingeleitet wird, aufgelöst und/oder extrahiert wird, wobei in dem Innenraum, insbesondere stromabwärts von einer Flüssigkeitszufuhr, ein Flüssigkeitsverteiler vorgesehen ist, der die Flüssigkeitszufuhr zumindest teilweise über den Querschnitt der Portionskapsel verteilt.

## Beschreibung

Die vorliegende Erfindung betrifft eine Portionskapsel mit einem Kapselkörper, dessen Wandung und Boden einen Innenraum begrenzen, in dem eine Getränke-/Lebensmittelsubstanz vorgesehen ist, die durch eine Flüssigkeit, die in die Portionskapsel eingeleitet wird, aufgelöst und/oder extrahiert wird, wobei in dem Innenraum, insbesondere stromabwärts von einer Flüssigkeitszufuhr, ein Flüssigkeitsverteiler vorgesehen ist, der die Flüssigkeitszufuhr zumindest teilweise über den Querschnitt der Portionskapsel verteilt.

Portionskapseln werden heutzutage vermehrt dazu eingesetzt, um Getränke oder Lebensmittel zuzubereiten. Dafür wird die Portionskapsel von einer Flüssigkeit, insbesondere heißem Wasser, durchströmt und dabei wird eine in der Portionskapsel vorhandene Getränke-/Lebensmittelsubstanz extrahiert und/oder aufgelöst. Das hieraus resultierende Getränk ist aber oftmals geschmacklich unzureichend.

Es war deshalb die Aufgabe der vorliegenden Erfindung, eine Portionskapsel zur Verfügung zu stellen, die die Nachteile des Standes der Technik nicht aufweist.

Gelöst wird die Aufgabe mit einer Portionskapsel mit einem Kapselkörper, dessen Wandung und Boden einen Innenraum begrenzen, in dem eine Getränke-/Lebensmittelsubstanz vorgesehen ist, die durch eine Flüssigkeit, die in die Portionskapsel eingeleitet wird, aufgelöst und/oder extrahiert wird, wobei in dem Innenraum, insbesondere stromabwärts von einer Flüssigkeitszufuhr, ein Flüssigkeitsverteiler vorgesehen ist, der die Flüssigkeitszufuhr zumindest teilweise über den Querschnitt der Portionskapsel verteilt.

Die vorliegende Erfindung betrifft eine Portionskapsel mit einem Kapselkörper, der eine Wandung, beispielsweise eine zylindrische oder konische Wandung, und einen Boden aufweist, die gemeinsam einen Innenraum begrenzen. In diesem Innenraum ist eine Getränke-/Lebensmittelsubstanz, mit der beispielsweise Tee, Kaffee, Espresso, aber auch ein Lebensmittel, wie beispielsweise Suppe, hergestellt werden kann, indem eine Flüssigkeit, insbesondere heißes Wasser, durch die Portionskapsel geleitet wird, das die Getränke-/Lebensmittelsubstanz auflöst und/oder extrahiert. Bei der Getränke-/Lebensmittelsubstanz handelt es sich beispielsweise um Kaffeepulver oder Teeblätter, aber auch getrocknete Milch oder Kakaopulver.

Erfindungsgemäß ist nun in dem Innenraum, insbesondere stromabwärts von der Flüssigkeitszufuhr und stromaufwärts von der Getränke-/Lebensmittelsubstanz, ein Flüssigkeitsverteiler vorgesehen, der die Flüssigkeitszufuhr, die in der Regel als Wasserstrahl in die Portionskapsel eingeleitet wird, zumindest teilweise über den Querschnitt der Portionskapsel verteilt. Alternativ erfolgt die Flüssigkeitszufuhr in die Brühkammer stromaufwärts von dem Deckel und wird durch vorzugsweise mehrere Öffnungen, insbesondere Einstechöffnungen, die vorzugsweise von einem Aufstechorgan in den Deckel, insbesondere die Deckelfolie, eingebracht werden, vorverteilt in den Kapselinnenraum eingeleitet und dann in einer zweiten Stufe durch den Flüssigkeitsverteiler zumindest teilweise über den Querschnitt der Portionskapsel verteilt.
Durch den Flüssigkeitsverteiler wird die Geschwindigkeit, mit der die Flüssigkeit auf die Getränke-/Lebensmittelsubstanz trifft, vermindert.

Gemäß einer bevorzugten Ausführungsform ist der Flüssigkeitsverteiler ein Kunststoffbauteil, das beispielsweise gespritzt und/oder tiefgezogen sein kann. Der Flüssigkeitsverteiler kann auch als poriges Bauteil vorzugsweise in Ein- oder Mehrverbundtechnik gefertigt sein.

Vorzugsweise weist der Flüssigkeitsverteiler eine Grundfläche mit Ausnehmungen auf, durch die die Flüssigkeit strömt und dabei verteilt wird. Die Grundfläche des Flüssigkeitsverteilers ist dabei zumindest im Wesentlichen parallel zu der Oberfläche der Getränke-/Lebensmittelsubstanz angeordnet.

In der Grundfläche ist eine Vielzahl von Ausnehmungen vorgesehen, die bezogen auf die Grundfläche vorzugsweise rechtwinklig zur Grundfläche oder schräg zur Grundfläche angeordnet sind und/oder vorzugsweise unterschiedliche Durchmesser aufweisen und/oder vorzugsweise auf der Grundfläche ungleichmäßig verteilt sind und/oder vorzugsweise einen konstanten Durchmesser aufweisen und/oder Ausnehmungen, deren Mittelpunkt auf einem Kreisring angeordnet sind. Für den Fall, dass die Ausnehmungen schräg vorgesehen sind, können diese Schrägen bei den Ausnehmungen zumindest teilweise in unterschiedlichen Winkeln vorgesehen sein und/oder die Richtung der Schrägen kann unterschiedlich sein. Die Ausnehmungen können beispielsweise einen runden, dreieckigen, rechteckigen oder quadratischen Querschnitt aufweisen.

Weiterhin bevorzugt ist die Grundfläche des Flüssigkeitsverteilers beabstandet von der ihr zugewandten Oberfläche der Getränke-/Lebensmittelsubstanz und/oder von dem Deckel angeordnet. Diese Ausführungsform der vorliegenden Erfindung hat den Vorteil, dass sich die Getränke-/Lebensmittelsubstanz ausdehnen kann, ohne die Öffnungen des Flüssigkeitsverteilers zu verstopfen und/oder die Portionskapsel zu beschädigen.

Gemäß einer weiteren bevorzugten Ausführungsform der vorliegenden Erfindung ist/sind am Umfang der Grundfläche des Flüssigkeitsverteilers eine Seitenwand oder ein oder mehrere Seitenwandabschnitte vorgesehen, die vorzugsweise im Wesentlichen parallel zu der Wandung des Kapselkörpers und/oder in einem rechten Winkel zu der Grundfläche des Flüssigkeitsverteilers verläuft/verlaufen. Diese Seitenwand/Seitenwandabschnitte können von der Oberfläche der Grundfläche in Richtung der Getränke-/Lebensmittelsubstanz und/oder in Richtung des Deckels abstehen. Vorzugsweise ist die Seitenwand des Flüssigkeitsverteilers konisch oder zylindrisch geformt. Jeder Seitenwandabschnitt steht in einem rechten Winkel oder schräg von der Oberfläche der Grundfläche ab.

Vorzugsweise sind an der Seitenwand oder mindestens einem Seitenwandabschnitt ein Formschlussmittel und/oder ein Reibschlussmittel vorgesehen, das form- und/oder reibschlüssig mit der Wandung des Kapselkörpers zusammenwirkt und dabei besonders bevorzugt auch als Dichtung für die Getränkesubstanz und/oder die Flüssigkeit wirkt. Vorzugsweise ist dieses Mittel so vorgesehen, dass es den Flüssigkeitsverteiler während des Transports der Portionskapsel in einer bestimmten, insbesondere von der Getränke-/Lebensmittelsubstanz entfernten, Lage fixiert. Der Druck der Flüssigkeit, die zur Herstellung des Getränks benötigt wird und die den Flüssigkeitsverteiler durchströmt, und/oder der Druck eines Aufstechmittels ist aber vorzugsweise ausreichend, um den Flüssigkeitsverteiler entlang der Wandung des Kapselkörpers in Richtung der Getränke-/Lebensmittelsubstanz zu bewegen, insbesondere zu verschieben und/oder zu verdrehen.

Gemäß einer bevorzugten Ausführungsform der vorliegenden Erfindung weist der Flüssigkeitsverteiler und/oder die Wandung des Kapselkörpers und/oder der Deckel ein Sollbruchmittel auf, das vorzugsweise beim Einströmen der Flüssigkeit bricht, so dass der zunächst in der Portionskapsel ortsfeste Flüssigkeitsverteiler beweglich wird. Gemäß dieser bevorzugten Ausführungsform der vorliegenden Erfindung ist der Flüssigkeitsverteiler nach der Herstellung der Portionskapsel und vorzugsweise bis zu deren Durchströmung zunächst mit dem Deckel und/oder mit dem Kapselkörper der Portionskapsel fest verbunden. Erfindungsgemäß ist jedoch ein Sollbruchmittel, beispielsweise eine Sollbruchstelle, vorgesehen, die insbesondere durch den Druck der in die Portionskapsel einströmenden Flüssigkeit und/oder die Bewegung eines Aufstechmittels beschädigt oder zerstört wird, wodurch sich der Flüssigkeitsverteiler zumindest teilweise bewegen und sich beispielsweise in Richtung der Getränke-/Lebensmittelsubstanz verschieben und/oder drehen kann.

Vorzugsweise ist der Flüssigkeitsverteiler als Membran vorgesehen, die sich beim Einströmen der Flüssigkeit und/oder durch das Eindringen eines Aufstechmittels in die Portionskapsel verformt. Besonders bevorzugt ist diese Membran in eine Richtung, insbesondere in Richtung des Deckels, ausgewölbt, insbesondere gekrümmt, so dass die Getränke-/Lebensmittelsubstanz Raum hat, sich in dem Kapselkörper zu bewegen. Vorzugsweise bewegt sich diese Membran durch den Druck der Flüssigkeit und/oder eines Aufstechmittels in Richtung der Getränke-/Lebensmittelsubstanz. Durch die Krümmung schnappt die Membran dabei vorzugsweise in Richtung der Getränke-/Lebensmittelsubstanz.

Vorzugsweise weist der Flüssigkeitsverteiler, insbesondere in radialer Richtung, Abschnitte aus unterschiedlichen Materialien und/oder unterschiedliche Materialeigenschaften und/oder Materialstärken auf. Für den Fall, dass der Flüssigkeitsverteiler als Membran ausgebildet ist, weist er vorzugsweise einen relativ elastischen inneren Bereich und einen relativ steifen äußeren Bereich auf, der sich an den äußeren Umfang des inneren Bereichs anschließt.

Weiterhin bevorzugt verformt sich die Seitenwand des Flüssigkeitsverteilers beim Einströmen der Flüssigkeit und/oder durch das Eindringen eines Aufstechmittels in die Portionskapsel. Diese Ausführungsform ist insbesondere dann bevorzugt, wenn die Seitenwand des Flüssigkeitsverteilers in Richtung der Getränke-/Lebensmittelsubstanz vorgesehen ist. Die Seitenwand kann sich dann, beispielsweise unter dem Druck der Flüssigkeit oder durch den Druck eines Aufstechmittels, krümmen, falten oder komprimieren und dadurch den Abstand zwischen der Grundfläche des Flüssigkeitsverteilers und der Oberfläche der Getränke-/Lebensmittelsubstanz vermindern.

Vorzugsweise bewegt die Flüssigkeit und/oder ein Aufstechmittel, das die Portionskapsel, insbesondere deren Deckel, vor oder bei der Getränke-/Lebensmittelherstellung öffnet, den Flüssigkeitsverteiler zumindest abschnittsweise in Richtung der Getränke-/Lebensmittelsubstanz. Die Bewegung kann im Wesentlichen linear und/oder als Drehung erfolgen.

Vorzugsweise ist der Flüssigkeitsverteiler zumindest in einer Erstreckungsrichtung komprimierbar vorgesehen, so dass ein Vorbeiströmen der Flüssigkeit an dem Flüssigkeitsverteiler vorbei verhindert wird und/oder um den Raum zwischen einer ggf. vorhandenen Deckelfolie und der Getränke-/Lebensmittelsubstanz zumindest im Wesentlichen vollständig auszufüllen.

Gemäß einer weiteren erfindungsgemäßen oder bevorzugten Ausführungsform ist der Flüssigkeitsverteiler aus einem gesinterten Material oder als 3-D-Druck vorgesehen.

Gesintert im Sinne der Erfindung bedeutet, dass einzelne Partikel, aus denen der Flüssigkeitsverteiler hergestellt ist, unter Druck- oder Temperatureinfluss miteinander verbunden werden.

3-D-Druck im Sinne der Erfindung bedeutet, dass der Flüssigkeitsverteiler schichtweise, beispielsweise aus einem pulverförmigen oder flüssigen Material aufgebaut wird, wobei die jeweils aufgetragene Schicht mit der darunter liegenden Schicht verbunden wird.

Vorzugsweise wird die Höhe des Flüssigkeitsverteilers so vorgesehen, dass er den Raum zwischen der Getränke-/Lebensmittelsubstanz und einer ggf. vorhandenen Deckelfolie und/oder dem Boden vollständig ausfüllt.

Vorzugsweise ist der Flüssigkeitsverteiler in der Portionskapsel komprimiert. Insbesondere ist der Flüssigkeitsverteiler zwischen dem Deckel und der Getränke-/Lebensmittelsubstanz komprimiert. Dadurch wird die Getränke-/Lebensmittelsubstanz in ihrer Lage fixiert und kann nicht, beispielsweise beim Transport der Portionskapsel, verrutschen.

Vorzugsweise weist der Flüssigkeitsverteiler eine Mehrzahl von Bohrungen auf, durch die die Flüssigkeit strömt.

Vorzugsweise ist am Umfang des Flüssigkeitsverteilers eine Dichtung vorgesehen, die zumindest vermindert, vorzugsweise verhindert, die Getränke-/Lebensmittelsubstanz zwischen den Flüssigkeitsverteiler und die Deckelfolie gelangt und/oder die ein Umströmen, d.h. einen Kurzschluss, der Flüssigkeit um den Flüssigkeitsverteiler zumindest reduziert.

Die Dichtung ist vorzugsweise als flexible Dichtlippe gestaltet, die sich beim Einführen in den Kapselkörper elastisch deformiert und dadurch in Richtung des Kapselkörpers vorgespannt ist.

Die Dichtung kann aus demselben oder einem unterschiedlichen Material wie der Flüssigkeitsverteiler gefertigt sein und/oder eine unterschiedliche Materialstärke als der Flüssigkeitsverteiler, insbesondere dessen Grundfläche oder Seitenwand aufweisen.

Zwischen der Seitenwand und/oder Grundfläche des Flüssigkeitsverteilers und der Dichtung kann ein Filmscharnier vorgesehen sein.

Vorzugsweise wirkt die Dichtung mit einem Vor- oder Rücksprung an der Kapselwandung zusammen.

Vorzugsweise kann sich die Dichtung deformieren, insbesondere elastisch deformieren. Durch diese Deformation wird vorzugsweise ein mit der Seitenwand der Portionskapsel vor der Getränkeherstellung bestehender Form- und/oder Kraftschluss beim Einströmen der Flüssigkeit und/oder durch die Bewegung eines Öffnungsmittels aufgehoben bzw. vermindert und der Flüssigkeitsverteiler in Richtung der Getränkesubstanz verschoben.

Vorzugsweise weist der Flüssigkeitsverteiler eine Vielzahl von Ausnehmungen auf, die auf einem oder mehreren Teilkreis(en) angeordnet sind.

Vorzugsweise befinden sich die Ausnehmung nur im äußeren Bereich des Flüssigkeitsverteilers, besonders bevorzugt beträgt der Durchmesser des Teilkreises auf dem sich die Ausnehmungen vorzugsweise äquidistant befinden 80 -95%, besonders bevorzugt 85 - 90% des Wirkdurchmessers des Flüssigkeitsverteilers, d.h, des Durchmessers der Fläche, die von der Flüssigkeit angeströmt wird.

Gemäß einer weiteren bevorzugten Ausführungsform ist der Flüssigkeitsverteiler stoffschlüssig mit der Getränke-/Lebensmittelsubstanz und/oder mit dem Kapselkörper verbunden, insbesondere durch Kleben verbunden.

Vorzugsweise ist der Kleber wasserlöslich. Beim Einleiten wird der Kleber dann gelöst und der Flüssigkeitsverteiler kann sich innerhalb der Portionskapsel frei bewegen.

Vorzugsweise wird der Flüssigkeitsverteiler auf die Getränke-/Lebensmittelsubstanz aufgelegt und mit dem Kleber, beispielsweise einem Hydrokolloid durch Stoffschluss in Position gehalten.

Alternativ oder zusätzlich wird die obere, dem Filter gegenüberliegende und/oder der Deckelfolie zugewandte, Schicht der Getränke-/Lebensmittelsubstanz mit einer Substanz, die insbesondere geschmacksneutral ist, versetzt, insbesondere getränkt, die einen Stoffschluss, insbesondere durch Kleben, der Partikel der Getränke-/Lebensmittelsubstanz untereinander und/oder mit dem Kapselkörper erzeugt. Nach dem Aushärten des Klebers hält diese geklebte Schicht die Getränke-/Lebensmittelsubstanz innerhalb der Portionskapsel in Position. Die Substanz, der Kleber, löst sich dann beim Brühvorgang unter dem Einfluss des heißen Wassers und des entstehenden Druckes auf.

Bevorzugt wird Getränke-/Lebensmittelsubstanz, insbesondere der Kaffee, innerhalb der Portionskapsel, beispielsweise durch eine Lochscheibe, mit einer Kraft zwischen 0-15kg, bevorzugt 12-15kg gepresst.

Ein weiterer Gegenstand der vorliegenden Erfindung ist ein System bestehend aus einer Brühkammer, in die eine erfindungsgemäße Portionskapsel eingeführt wird und mit einem Brühkolben, der die Brühkammer verschließt und an dem ein Aufstechmittel vorgesehen ist, mit dem die Kapsel geöffnet wird, wobei das Aufstechmittel den Flüssigkeitsverteiler innerhalb der Portionskapsel verschiebt und dabei die Getränke-/Lebensmittelsubstanz in ihrer Lage verändert.

Die zu diesem Gegenstand der vorliegenden Erfindung gemachten Ausführungen gelten für die anderen Gegenstände der vorliegenden Erfindung gleichermaßen und umgekehrt. Die Merkmale der einzelnen Gegenstände der vorliegenden Erfindung können miteinander kombiniert werden.

In seiner Lage verändern bedeutet, dass die Getränke-/Lebensmittelsubstanz komprimiert und/oder dass Ungleichverteilungen der Getränke-/Lebensmittelsubstanz beispielsweise durch Transport und/oder Lagerung zumindest teilweise wieder ausgeglichen werden. Beispielsweise kann die Getränke-/Lebensmittelsubstanz beim Transport innerhalb der Portionskapsel verrutschen und/oder sich lockern. Dieses Verrutschen bzw. Lockern wird durch den Flüssigkeitsverteiler zumindest teilweise wieder rückgängig gemacht indem der Flüssigkeitsverteiler auf die Getränke-/Lebensmittelsubstanz vor und/oder bei der Erzeugung des Getränks oder Lebensmittels drückt.

Das Aufstechmittel, beispielsweise ein Aufstechdorn, durchdringt dabei vorzugsweise zunächst die Deckelfolie und drückt dann auch den Flüssigkeitsverteiler in Richtung der Getränkesubstanz.

Der Flüssigkeitsverteiler ist zumindest abschnittsweise als starre oder semistarre Platte ausgebildet.

Gemäß einer weiteren erfindungsgemäßen oder bevorzugten Ausführungsform ist an dem Brühkolben ein Stempel vorgesehen, der den Flüssigkeitsverteiler innerhalb der Portionskapsel verschiebt und dabei die Getränke-/Lebensmittelsubstanz in ihrer Lage verändert.

Die zu diesem Gegenstand der vorliegenden Erfindung gemachten Ausführungen gelten für die anderen Gegenstände der vorliegenden Erfindung gleichermaßen und umgekehrt. Die Merkmale der einzelnen Gegenstände der vorliegenden Erfindung können miteinander kombiniert werden.

Vorzugsweise ist der Stempel fest mit dem Brühkolben verbunden oder relativ zu diesem beweglich vorgesehen ist.

Beispielsweise kann der Stempel von dem Druck der Flüssigkeit, mit der das Getränk oder das Lebensmittel hergestellt wird, relativ zu dem Brühkolben verschoben werden.

Ein weiterer Gegenstand der vorliegenden Erfindung ist ein Verfahren zur Erzeugung eines Getränks oder Lebensmittels, bei dem eine Flüssigkeit durch eine Portionskapsel strömt und dabei eine Getränke-/Lebensmittelsubstanz löst und/oder extrahiert, wobei die Flüssigkeit von einem Flüssigkeitsverteiler, der stromaufwärts von der Getränke-/Lebensmittelsubstanz vorgesehen ist, über den Querschnitt der Portionskapsel verteilt wird, wobei der Flüssigkeitsverteiler beim Durchströmen der Flüssigkeit und/oder durch die Bewegung eines Aufstechmittels, das die Portionskapsel öffnet, insbesondere deren Deckel ansticht, deformiert und/oder bewegt wird.

Die zu der erfindungsgemäßen Portionskapsel gemachten Ausführungen gelten für das erfindungsgemäße Verfahren gleichermaßen und umgekehrt. Merkmale des Verfahrens können mit Merkmalen der anderen Gegenstände der vorliegenden Erfindung kombiniert werden und umgekehrt.

Gemäß einer bevorzugten Ausführungsform der vorliegenden Erfindung wird ein zwischen dem Kapselkörper und/oder dem Deckel und dem Flüssigkeitsverteiler vorgesehenes Sollbruchmittel durch den Druck eines Aufstechmittels oder durch den Druck der einströmenden Flüssigkeit beschädigt oder zerstört, so dass sich der zunächst in der Portionskapsel ortsfest vorgesehene Flüssigkeitsverteiler in der Portionskapsel bewegen kann. Beispielsweise kann sich der Flüssigkeitsverteiler in Richtung der Getränke-/Lebensmittelsubstanz verschieben und/oder drehen.

Ein weiterer Gegenstand der vorliegenden Erfindung ist ein Verfahren zur Herstellung eines Getränks oder Lebensmittels, bei dem ein Stoffschluss zwischen der Getränke-/Lebensmittelsubstanz und/oder dem Kapselkörper und dem Flüssigkeitsverteiler beim Durchströmen der Portionskapsel mit einer Flüssigkeit gelöst wird.

Die zu der erfindungsgemäßen Portionskapsel gemachten Ausführungen gelten für das erfindungsgemäße Verfahren gleichermaßen und umgekehrt. Merkmale des Verfahrens können mit Merkmalen der anderen Gegenstände der vorliegenden Erfindung kombiniert werden und umgekehrt.

Beispielsweise wird der Flüssigkeitsverteiler mit der Getränke-/Lebensmittelsubstanz und/oder mit dem Kapselkörper verklebt, wobei sich dieser Stoffschluss bei der Herstellung des Getränks oder Lebensmittels vorzugsweise wieder auflöst, so dass sich der Flüssigkeitsverteiler in der Portionskapsel bewegen kann.

Vorzugsweise bewegt der Wasserdruck den Flüssigkeitsverteiler.

Noch ein weiterer Gegenstand der vorliegenden Erfindung ist ein Verfahren zur Erzeugung eines Getränks oder Lebensmittels, bei dem eine Flüssigkeit durch eine Portionskapsel strömt und dabei eine Getränke-/Lebensmittelsubstanz löst und/oder extrahiert, bei dem die Getränke-/Lebensmittelsubstanz vor und/oder bei der Erzeugung des Getränks in seiner Lage innerhalb der Portionskapsel verändert wird.

Die zu der erfindungsgemäßen Portionskapsel gemachten Ausführungen gelten für das erfindungsgemäße Verfahren gleichermaßen und umgekehrt. Merkmale des Verfahrens können mit Merkmalen der anderen Gegenstände der vorliegenden Erfindung kombiniert werden und umgekehrt.

Im Folgenden werden die Erfindungen anhand der Figuren erläutert. Diese Erläuterungen sind lediglich beispielhaft und schränken den allgemeinen Erfindungsgedanken nicht ein.
- **Figuren 1 - 4**: zeigen jeweils eine Ausführungsform eines Flüssigkeitsverteilers einer erfindungsgemäßen Portionskapsel.
- **Figur 5**: zeigt schematisch eine erfindungsgemäße Portionskapsel mit einer Membran als Flüssigkeitsverteiler.
- **Figur 6**: zeigt eine weitere Ausführungsform eines Flüssigkeitsverteilers einer erfindungsgemäßen Portionskapsel.
- **Figur 7**: zeigt eine weitere Ausführungsform der erfindungsgemäßen Portionskapsel.
- **Figur 8**: zeigt noch eine weitere Ausführungsform der erfindungsgemäßen Portionskapsel.
- **Figur 9**: zeigt Details des Flüssigkeitsverteilers.
- **Figuren 10 und 10a**: zeigen weitere Ausführungsformen des Flüssigkeitsverteilers.
- **Figur 11**: zeigt den Flüssigkeitsverteiler in einem Kapselkörper.
- **Figuren 12a und 12b**: zeigen die Lochanordnung des Flüssigkeitsverteilers.
- **Figuren 13 - 16**: zeigen jeweils eine Ausführungsform des erfindungsgemäßen Systems bzw. der erfindungsgemäßen Verfahren.

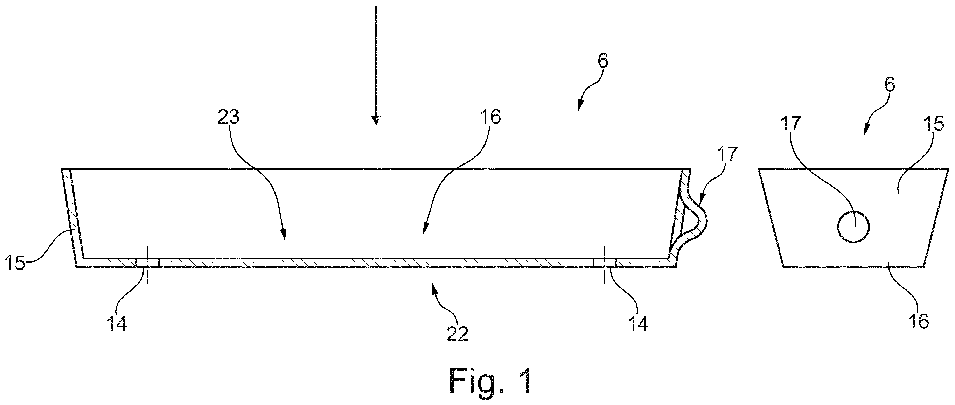

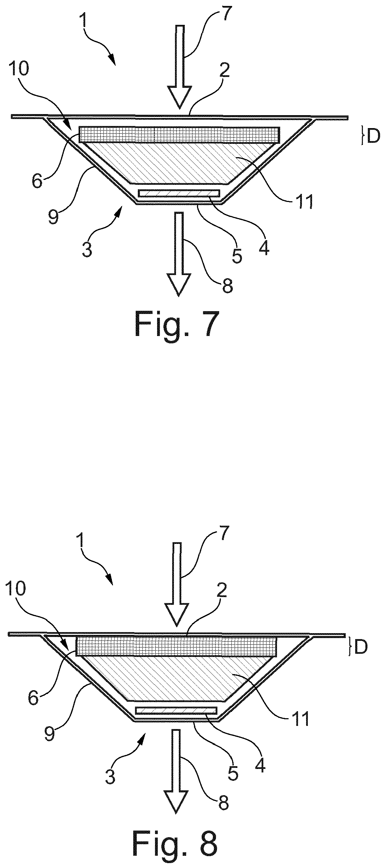

**Figur 1** zeigt eine erste Ausführungsform eines Flüssigkeitsverteilers, der beispielsweise in einer Portionskapsel, wie sie anhand von Figur 7 beschrieben ist, Anwendung findet. Der Flüssigkeitsverteiler 6 ist in dem vorliegenden Fall ein Kunststoffteil, das beispielsweise gespritzt oder tiefgezogen ist. Der Flüssigkeitsverteiler 6 weist in dem vorliegenden Fall eine Grundfläche 16 auf, in der eine Vielzahl von Ausnehmungen 14 vorgesehen sind, durch die die Flüssigkeit, die zur Herstellung des Getränks eingesetzt wird und die durch einen Pfeil dargestellt ist, strömt, bevor sie auf eine zu lösende und/oder zu extrahierende Getränke-/Lebensmittelsubstanz stößt. An ihrem Umfang ist die Grundfläche mit einer Seitenwand oder mit Seitenwandabschnitten versehen, die sich in dem vorliegenden Fall von der der Getränke-/Lebensmittelsubstanz abgewandten Oberfläche 23 der Grundfläche 16 erstreckt/erstrecken. Der Fachmann erkennt, dass sich die Seitenwand 15 alternativ oder zusätzlich auch von der gegenüberliegenden Oberfläche 22 des Flüssigkeitsverteilers erstrecken kann. In dem dargestellten Fall ist die Seitenwand zwischen dem Deckel (nicht dargestellt) und der Grundfläche 16 des Flüssigkeitsverteilers 6 angeordnet. In der Seitenwand sind in dem vorliegenden Fall vorzugsweise mehrere Formschlussmittel 17 vorgesehen, die formschlüssig mit der Wandung der Portionskapsel zusammenwirken und den Flüssigkeitsverteiler dadurch, insbesondere vor dessen Nutzung zur Herstellung eines Getränks oder Lebensmittels, in einer bestimmten Position fixieren. Das Formschlussmittel kann beispielsweise kugelsegmentförmig, konisch geformt sein. Die Wandung der Portionskapsel weist vorzugsweise einen entsprechenden Hinterschnitt auf. Vorzugsweise wird der Flüssigkeitsverteiler 6 beabstandet von der Oberfläche der Getränke-/Lebensmittelsubstanz vorgesehen, so dass diese sich beispielsweise ausdehnen kann, ohne die Ausnehmungen 14 mit Getränke-/Lebensmittelsubstanz zu verstopfen und/oder die Portionskapsel, insbesondere deren Deckel 2, zu beschädigen. Für die Herstellung eines Getränks wird die Portionskapsel, insbesondere deren Deckel, vorzugsweise geöffnet, beispielsweise wird der Deckel mit einem Aufstechmittel angestochen. Dabei oder danach strömt eine Flüssigkeit, die zur Herstellung des Getränks oder des Lebensmittels benötigt wird in die Portionskapsel ein und trifft zunächst auf den Flüssigkeitsverteiler 6, der die Flüssigkeit über den Querschnitt der Portionskapsel verteilt. Es ist aber auch möglich, dass die Flüssigkeit stromaufwärts von der Deckelfolie in eine Brühkammer, in der sich die Portionskapsel bei der Herstellung des Getränks oder Lebensmittels befindet, eingeleitet wird und dann durch mehrere Öffnungen, die sich in dem Deckel 2, insbesondere einer Deckelfolie 2 befinden, vorverteilt werden. Die so vorverteilte Flüssigkeit wird dann in einem weiteren Schritt mit dem Flüssigkeitsverteiler 6 noch einmal, insbesondere großflächiger, vorzugsweise über den gesamten Querschnitt der Portionskapsel, verteilt. Vorzugsweise ist das Formschlussmittel so vorgesehen, dass die Kraft des Aufstechmittels, das den Flüssigkeitsverteiler beim Aufstechen der Portionskapsel berührt, und/oder der Druck der Flüssigkeit ausreichen, um den Formschluss zwischen dem Flüssigkeitsverteiler 6 und der Wandung der Portionskapsel zu überwinden. Dadurch kann der Flüssigkeitsverteiler beispielsweise in Richtung der Getränke-/Lebensmittelsubstanz verschoben werden und diese dabei in ihrer Lage verändern und/oder komprimieren. Anhand der Figur 1 ist zu erkennen, dass das Formschlussmittel 17 vorzugsweise nur lokal vorgesehen ist. Es kann aber auch vollumfänglich an der Seitenwand angeordnet sein.

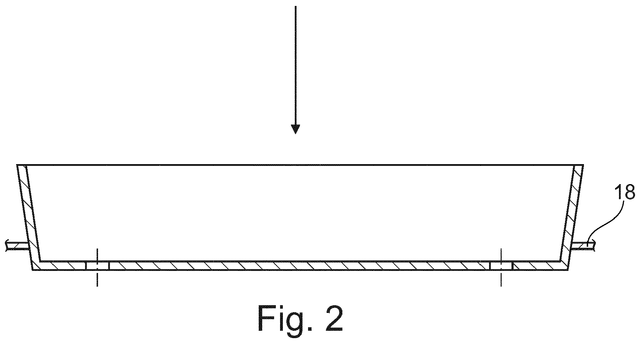

**Figur 2** zeigt eine weitere Ausführungsform eines Flüssigkeitsverteilers. Im Wesentlichen kann auf die Ausführungen gemäß Figur 1 Bezug genommen werden, mit dem Unterschied, dass in dem vorliegenden Fall statt eines Formschlussmittels 17 ein Reibschlussmittel 18, das reibschlüssig mit der Innenseite der Wandung des Kapselkörpers zusammenwirkt, vorgesehen ist. Alternativ oder zusätzlich kann aber auch ein Sollbruchmittel 18 vorgesehen sein, das den Flüssigkeitsverteiler 6 mit der Wandung der Portionskapsel verbindet. Dieses Sollbruchmittel ist so dimensioniert, dass es durch die Bewegung eines Aufstechmittels und/oder durch den Druck der einströmenden Flüssigkeit so beschädigt oder zerstört wird, dass sich der Flüssigkeitsverteiler, der zunächst ortsfest im Inneren der Portionskapsel vorgesehen war, nach dem Zerstören des Sollbruchmittels bewegen kann und von dem Aufstechmittel und/oder dem Druck der Flüssigkeit in Richtung der Getränke-/Lebensmittelsubstanz geschoben oder gedreht wird. Ortsfest im Sinne der Erfindung bedeutet, dass sich der Flüssigkeitsverteiler unter normaler Beanspruchung, beispielsweise beim Transport oder beim Einführen der Portionskapsel in eine Brühvorrichtung nicht bewegt. Diese Verbindung wird erst durch den Flüssigkeitsdruck und/oder das Aufstechmittel zumindest teilweise aufgehoben.

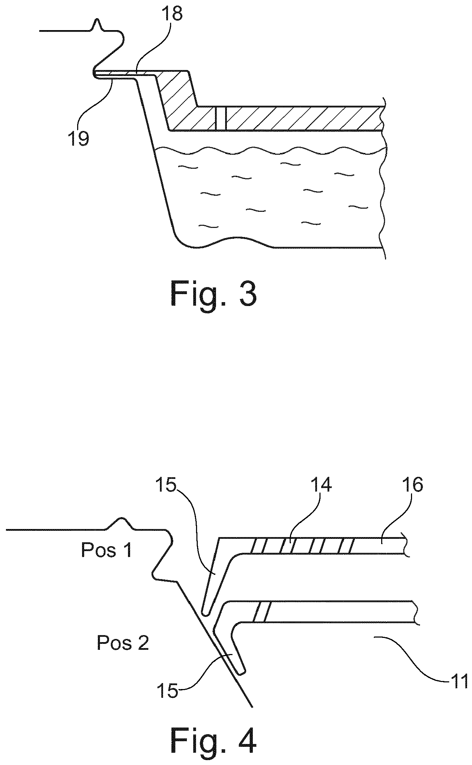

**Figur 3** zeigt noch eine Ausführungsform der erfindungsgemäßen Portionskapsel, bei der der Flüssigkeitsverteiler 6 ein Sollbruchmittel 18 aufweist, das vorzugsweise auf einem Auflager, das an der Wandung des Kapselkörpers vorgesehen ist, aufliegt. Das Auflager ist in dem vorliegenden Fall als Hinterschnitt in der Wandung des Kapselkörpers gestaltet, so dass der Flüssigkeitsverteiler in seiner Lage fixiert ist. Ansonsten wird auf die zu den Figuren 1 und 2 gemachten Ausführungen verwiesen.

**Figur 4** zeigt noch eine Ausführungsform der erfindungsgemäßen Portionskapsel. In dem vorliegenden Fall weist der Flüssigkeitsverteiler eine Seitenwand oder Seitenwandabschnitte auf, die sich von der Grundfläche 16 des Flüssigkeitsverteilers ausgehend in Richtung der Getränke-/Lebensmittelsubstanz erstrecken. Die Seitenwand oder die Seitenwandabschnitte 15 sind in dem vorliegenden Fall so deformierbar vorgesehen, dass sie sich beim Eindringen des Aufstechmittels und/oder durch den Wasserdruck deformieren oder komprimieren können, wodurch sich ihre Form so ändert, dass der Flüssigkeitsverteiler in Richtung der Getränke-/Lebensmittelsubstanz verschoben werden kann. Die Seitenwand bzw. die Seitenwandabschnitte dringen dabei vorzugsweise in die Getränke-/Lebensmittelsubstanz zumindest temporär ein.

Bei den Ausführungsformen gemäß den Figuren 1 - 4 hat eine konisch gestaltete Wandung des Kapselkörpers den Vorteil, dass sich die Kraft, die benötigt wird, um den Flüssigkeitsverteiler in Richtung der Getränke-/Lebensmittelsubstanz zu bewegen, fortlaufend erhöht. Ansonsten wird auf die Ausführungen zu den Figuren 1 - 3 verwiesen.

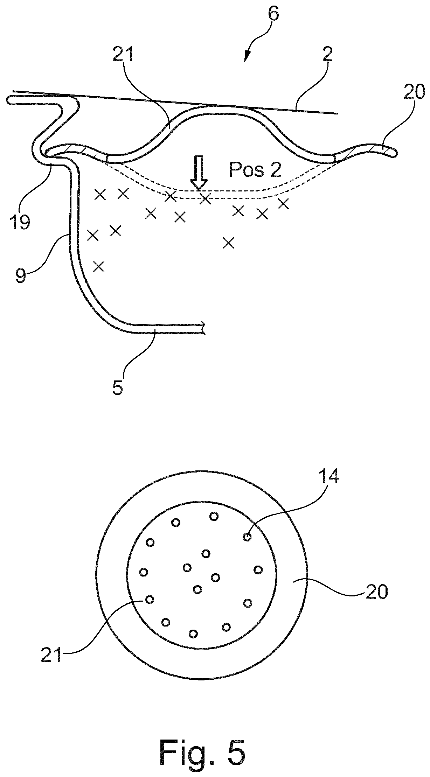

**Figur 5** zeigt noch eine Ausführungsform der erfindungsgemäßen Portionskapsel. In dem vorliegenden Fall ist der Flüssigkeitsverteiler eine Membran, die einen ersten Abschnitt aufweist, der mit Ausnehmungen 14 versehen ist und der vorzugsweise in Richtung des Deckels 2 der Portionskapsel gewölbt ist. Vorzugsweise ist dieser Abschnitt aus einem vergleichsweise flexiblen Material 21 gefertigt. Am Umfang dieses ersten Bereichs 21 schließt sich ein vorzugsweise vergleichsweise steifer Bereich, beispielsweise ein Ring, an, der ebenfalls gewölbt sein kann und mit dem Kapselkörper, insbesondere dessen Wandung, verbunden ist. Der Fachmann versteht, dass beide Bereiche aus demselben Material oder unterschiedlichen Materialien gefertigt sein können. Weiterhin können sich beide Bereiche durch ihre Materialstärke unterscheiden. In der mit der durchgezogenen Linie dargestellten Position 1 ist die Membran von der Getränke-/Lebensmittelsubstanz beabstandet. Bedingt durch das eindringende Aufstechmittel und/oder den Wasserdruck wird die Membran von Position 1 in die Position 2 verbracht, in der sie an der Getränke-/Lebensmittelsubstanz anliegt und sogar Druck auf diese ausübt.

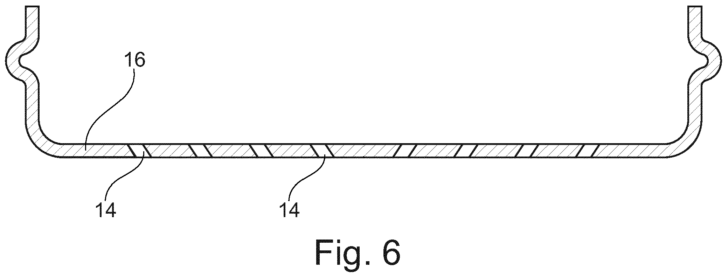

**Figur 6** zeigt eine bevorzugte Ausführungsform der Grundfläche des Flüssigkeitsverteilers. Es ist deutlich zu erkennen, dass die Ausnehmungen 14, durch die die Flüssigkeit strömt, schräg zu der Oberfläche der Grundfläche vorgesehen sind. Weiterhin ist zu erkennen, dass der Grad der Schräge für die jeweiligen Ausnehmungen und/oder die Richtung der Schräge unterschiedlich sein kann. Zusätzlich können die Ausnehmungen mit einer unterschiedlichen Querschnittsfläche ausgestattet sein. Die Verteilung der Ausnehmungen muss ebenfalls nicht äquidistant sein. Der Abstand von einer Ausnehmung zur nächsten kann unterschiedlich sein. Die Querschnittsfläche der jeweiligen Ausnehmung ist aber über deren Länge vorzugsweise konstant.

**Figur 7** zeigt die erfindungsgemäße Portionskapsel 1, die einen Kapselkörper 3 mit einer Kapselwandung 9 und einem Kapselboden 5 aufweist. Der Kapselkörper ist beispielsweise aus einem Kunststoffmaterial gefertigt, insbesondere aus einer Folienbahn tiefgezogen oder gespritzt. Die Kapselwandung 9 und der Kapselboden 5 definieren einen Innenraum 10, der in dem vorliegenden Fall mit einem Deckel, insbesondere einer Deckelfolie 2, verschlossen ist, der mit dem Rand des Kapselkörpers, beispielsweise durch Siegeln oder Kleben verbunden ist. In dem Innenraum befindet sich eine Getränke-/Lebensmittelsubstanz, die zur Herstellung des Getränks oder des Lebensmittels verwendet wird. Dafür wird die Portionskapsel von einer Flüssigkeit, insbesondere heißem Wasser, durchströmt, die in dem vorliegenden Fall, wie durch den Pfeil 7 dargestellt, durch den Deckel der Portionskapsel in den Innenraum der Portionskapsel einströmt und dort die Getränke-/Lebensmittelsubstanz auflöst und/oder extrahiert. Vorzugsweise erfolgt die Flüssigkeitszufuhr in die Brühkammer stromaufwärts von dem Deckel und wird durch vorzugsweise mehrere Öffnungen, insbesondere Einstechöffnungen, die vorzugsweise von einem Aufstechorgan in den Deckel, insbesondere die Deckelfolie, eingebracht werden, vorverteilt in den Kapselinnenraum eingeleitet und dann in einer zweiten Stufe durch den Flüssigkeitsverteiler zumindest teilweise über den Querschnitt der Portionskapsel verteilt wird.
Das so hergestellte Getränk oder Lebensmittel verlässt die Portionskapsel, hier am Boden, wie durch den Pfeil 8 dargestellt. In der Regel ist der Innenraum der Portionskapseln vor deren Gebrauch hermetisch abgeschlossen. Bei der Getränke- und/oder Lebensmittelherstellung werden der Deckel und/oder der Kapselboden jeweils von einem Aufstechmittel geöffnet, insbesondere aufgestochen, das in der Regel dabei in den Innenraum der Portionskapsel eindringt. Alternativ kann ein Verschlusselement, beispielsweise eine Folie zum Öffnen der Portionskapsel von der Portionskapsel entfernt werden.

Der Fachmann versteht, dass die Strömungsrichtungen auch umgekehrt sein können.

Vorzugsweise ist im Innenraum der Portionskapsel ein Filterelement 4 vorgesehen, das verhindert, dass Partikel der Getränke-/Lebensmittelsubstanz in das herzustellende Getränk/Lebensmittel gelangen. Erfindungsgemäß ist im Innenraum der Portionskapsel ein Flüssigkeitsverteiler 6 vorgesehen, der die einströmende Flüssigkeit zumindest teilweise über den Querschnitt der Portionskapsel verteilt und dadurch zu einer gleichmäßigeren Extraktion bzw. Lösung der Getränke-/Lebensmittelsubstanz führt. Des Weiteren wird durch den Flüssigkeitsverteiler erreicht, dass die Einströmgeschwindigkeit der Flüssigkeit reduziert wird und gleichmäßig über den Querschnitt der Portionskapsel verteilt wird, wodurch die Qualität des resultierenden Getränks bzw. Lebensmittels steigt. Bei dem Beispiel gemäß Figur 1 ist die Dicke des Flüssigkeitsverteilers so vorgesehen, dass zwischen dem Flüssigkeitsverteiler und dem Deckel 2 noch ein gewisser Abstand vorhanden ist.

**Figur 8** zeigt noch eine weitere Ausführungsform der erfindungsgemäßen Portionskapsel. Im Wesentlichen kann auf die Ausführungen gemäß Figur 7 Bezug genommen werden, wobei in dem vorliegenden Fall die Dicke D des Flüssigkeitsverteilers so vorgesehen ist, dass dieser den Abstand zwischen der Oberseite der Getränke-/Lebensmittelsubstanz und dem Deckel vollständig ausfüllt. Gegebenenfalls wird der Flüssigkeitsverteiler sogar zwischen der Getränke-/Lebensmittelsubstanz und dem Deckel komprimiert. Dadurch wird erreicht, dass der Flüssigkeitsverteiler gleichzeitig die Getränke-/Lebensmittelsubstanz in ihrer Lage stabilisiert, so dass diese, beispielsweise beim Transport der Portionskapsel, nicht verrutscht. Beim Anstechen der Kapsel wird ein solcher Flüssigkeitsverteiler vorzugsweise ebenfalls angestochen.

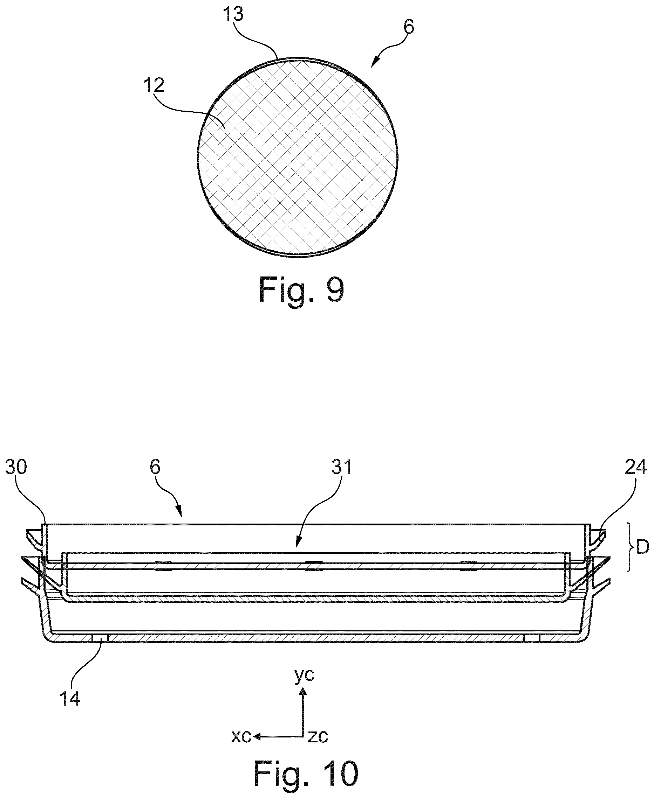

**Figur 9** zeigt Details des Flüssigkeitsverteilers. In dem vorliegenden Fall ist der Flüssigkeitsverteiler aus einer Vielzahl von Fasern hergestellt, die vorzugsweise, beispielsweise durch Kleben oder durch eine Wärmebehandlung, miteinander verbunden sind. Vorzugsweise sind die Fasern so angeordnet, dass ihre Längsausrichtung der Durchströmrichtung durch den Flüssigkeitsverteiler entspricht. In dem vorliegenden Fall ist des Weiteren noch eine Ummantelung um das Fasermaterial vorgesehen, um den Flüssigkeitsverteiler in seiner Form zu stabilisieren und/oder um den Verbund zwischen den Fasern herzustellen und/oder zu verbessern. Alternativ oder zusätzlich sind einzelne Fasern, insbesondere durch einen Stoffschluss, miteinander verbunden.

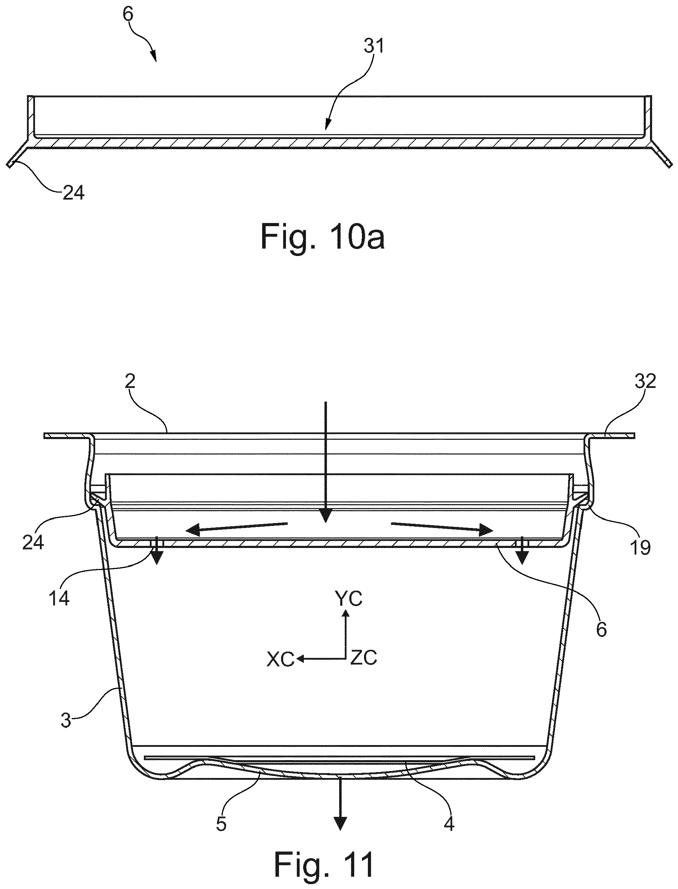

**Figur 10** zeigt eine weitere Ausführungsform des Flüssigkeitsverteilers 6, der in dem vorliegenden Fall in drei unterschiedlichen Größen dargestellt ist, wobei die Größen sich zumindest teilweise in ihrem Durchmesser, d. h. in ihrer angeströmten Fläche 31, aber insbesondere in ihrer Höhe D, unterscheiden, so dass bei gleichbleibendem Kapselkörper unterschiedliche Mengen an Getränke-/Lebensmittelsubstanz in die Kapsel eingefüllt werden können und der Flüssigkeitsverteiler zumindest teilweise den Raum innerhalb des Kapselkörpers, innerhalb dessen sich die Getränke-/Lebensmittelsubstanz bewegen kann, einschränkt und/oder dass der Flüssigkeitsverteiler bei einem konischen Kapselkörper in unterschiedlichen Höhen und/oder bei unterschiedlichen Kapseln eingesetzt werden kann.

Allen dargestellten Flüssigkeitsverteilern ist gemeinsam, dass sie an ihrem äußeren Umfang umlaufend eine Dichtung/Unterstützung 24 aufweisen, die zumindest teilweise verhindert, dass die Getränke-/Lebensmittelsubstanz zwischen den Flüssigkeitsverteiler und die Deckelfolie gelangt. Diese Dichtung 24 ist in dem vorliegenden Fall winklig zu einer ebenfalls umlaufenden Seitenwand 30 des Flüssigkeitsverteilers vorgesehen. Vorzugsweise ist die Dichtung selbst und/oder deren Verbindung zu dem Flüssigkeitsverteiler 6, hier der Seitenwand 30, so vorgesehen, dass diese sich elastisch verformen kann. Beispielsweise ist die Verbindung als sogenanntes Filmscharnier gestaltet. Insbesondere beim Einführen des Flüssigkeitsverteilers wird die Dichtung, hier die Dichtlippe, in Richtung der Seitenwand elastisch verformt, so dass sich der Winkel zwischen Dichtung 24 und Seitenwand 30 verkleinert und sie gegen die Kapselwandung 9 vorgespannt ist. Die angeströmte Fläche 31, die in dem vorliegenden Fall kreisförmig ist, weist mehrere Ausnehmungen 14, hier Bohrungen, auf, durch die die Flüssigkeit strömt und dadurch gezielt in die Getränke-/Lebensmittelsubstanz eingeleitet wird. Des Weiteren verhindert die angeströmte Fläche 31 des Flüssigkeitsverteilers, dass die in die Portionskapsel eingeleitete Flüssigkeit direkt in die Getränke-/Lebensmittelsubstanz einströmt und diese dadurch aufwirbelt und/oder umverteilt.

**Figur 10a** zeigt eine weitere Ausführungsform des erfindungsgemäßen Flüssigkeitsverteilers. Wiederum ist zu erkennen, dass die von der Flüssigkeit angeströmte, hier planare, kreisförmige Fläche 31 von einer, hier senkrecht dazu vorgesehenen, Seitenwand 30 umgeben ist und dass der Flüssigkeitsverteiler Ausnehmungen 14 aufweist, durch die die Flüssigkeit in die Getränke-/Lebensmittelsubstanz strömt. Im Gegensatz zu dem in Figur 10 dargestellten Flüssigkeitsverteiler ist die Dichtung 24 in dem vorliegenden Fall von der Seitenwand wegweisend vorgesehen, so dass sich beim Einführen des Flüssigkeitsverteilers in die Portionskapsel der Winkel zwischen der Seitenwand 30 und der Dichtung 24 vergrößert.

Ansonsten kann jedoch auf die Ausführungen gemäß Figur 10 Bezug genommen werden, wobei für den Flüssigkeitsverteiler gemäß Figur 10 und gemäß Figur 10a gilt, dass die Verbindung zwischen der Dichtung und der Seitenwand vorzugsweise so vorgesehen ist, dass bei einer Beaufschlagung des Flüssigkeitsverteilers mit einer bestimmten Kraft, die durch die einströmende Flüssigkeit oder beispielsweise durch einen Stempel oder durch ein Aufstechdmittel, das die Portionskapsie öffnet, aufgebracht werden kann, diese sich so verformt und/oder in ihrer Lage ändert, sich beispielsweise mehr an die Seitenwand anlegt, dass sich der Flüssigkeitsverteiler innerhalb der Portionskapsel bewegen, insbesondere linear in Richtung der Getränke-/Lebensmittelsubstanz verschieben kann.

Der Fachmann erkennt im Übrigen, dass die Seitenwand nicht notwendigerweise vorhanden sein muss.

**Figur 11** zeigt schematisch die erfindungsgemäße Portionskapsel, wobei in dem vorliegenden Fall lediglich der Kapselkörper 3, der mit einer Deckelfolie 4 verschlossen ist die mit einem umlaufenden Flansch 32 verbunden ist, dargestellt ist. Die Portionskapsel ist rotationssymetrisch ausgebildet. Im Innenraum der Portionskapsel befindet sich der Flüssigkeitsverteiler 6, dessen Dichtung 24 in dem vorliegenden Fall auf einem Auflager 19 aufliegt und sich daran abstützt und mit dieser Fläche und/oder mit dem sonstigen Kapselkörper dichtend zusammenwirkt. Es ist deutlich zu erkennen, dass die Dichtung 24 beim Einführen in die Portionskapsel durch die Fläche, die zu diesem Zeitpunkt von der Deckelfolie 2 noch nicht verschlossen ist, elastisch verformt wird und, sobald sie den Bereich des Auflagers 19 erreicht hat, sich in diesen zumindest teilweise rückformt und somit gegen die Kapselwandung und(oder gegen das Auflager 19 vorgespannt ist.

Ebenfalls in Figur 11 schematisch dargestellt ist der Strom der Flüssigkeit durch die Portionskapsel. Die Flüssigkeit strömt an einer oder mehreren Stellen durch die Deckelfolie und trifft sodann auf die angeströmte Fläche 31 des Flüssigkeitsverteilers. Hier wird der Strom ggf. abgebremst und in Richtung der Ausnehmungen 14 geleitet, durch die die Flüssigkeit in die Getränke-/Lebensmittelsubstanz (nicht dargestellt) strömt. Beim Durchströmen der Getränke-/Lebensmittelsubstanz wird diese gelöst oder in ihr befindliche Substanzen werden extrahiert und das so hergestellte Getränk oder Lebensmittel verlässt sodann im Bereich des Kapselbodens die Portionskapsel. Um zu vermeiden, dass Partikel der Getränke-/Lebensmittelsubstanz in das fertige Getränk bzw. Lebensmittel gelangen, ist in dem vorliegenden Fall ein Filterelement 4 im Bereich des Bodens vorgesehen, das beispielsweise aus einem nicht gewebten Fasermaterial besteht. Die Ausnehmungen 14 sind nur im Randbereich der angeströmten Fläche des Flüssigkeitsverteilers angeordnet und das fertige Getränk oder Lebensmittel wird vorzugsweise wie dargestellt zentral in der Mitte des Kapselbodens 5 abgezogen. Trotzdem gelingt eine so gute Flüssigkeitsverteilung, dass insbesondere Kaffeepulver sehr gut extrahiert oder Instant-Kaffee gut gelöst wird. Diese Ausführungen gelten für alle dargestellten Ausführungsformen des Flüssigkeitsverteilers oder des Systems.

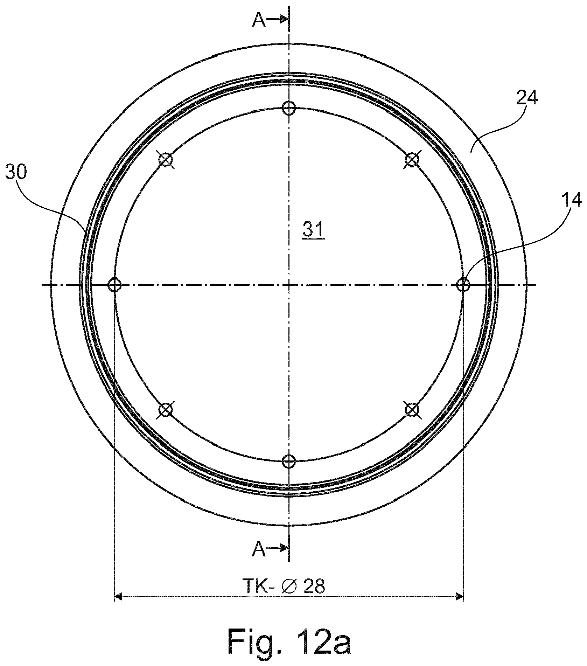

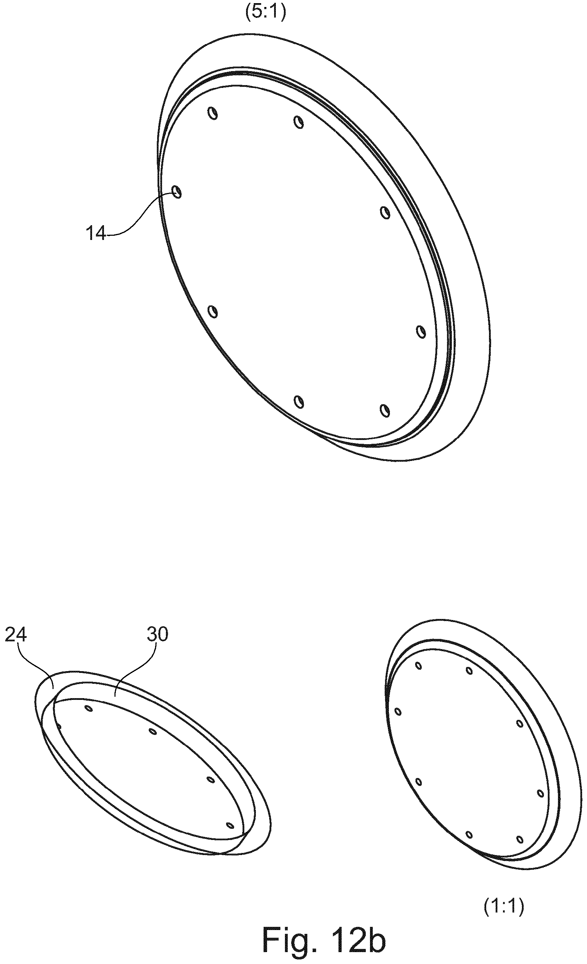

Die **Figuren 12a** **und** **12b** zeigen Details des Flüssigkeitsverteilers gemäß Figur 10. Es ist deutlich zu erkennen, dass im Bereich der angeströmten Fläche 31 Ausnehmungen 14 vorgesehen sind, die in dem vorliegenden Fall äquidistant auf einem Teilkreis angeordnet sind, der sich im Bereich des äußeren Durchmessers der angeströmten Fläche 31 befindet. Die Flüssigkeit wird vorzugsweise innerhalb dieses Teilkreises eingeleitet und strömt dann, insbesondere radial, nach außen in Richtung der Ausnehmungen 14. In dem vorliegenden Fall beträgt der Teilkreisdurchmesser 28 mm bei einem Durchmesser der angeströmten Fläche von 30 - 33mm, wobei diese Werte nur bevorzugte Maße sind. Weiterhin sind die Seitenwand 30 sowie die Dichtung 24 zu erkennen, die aber nicht notwendigerweise vorhanden sein müssen und für die Flüssigkeitsverteilung selbst nur eine vergleichsweise untergeordnete Rolle spielen.

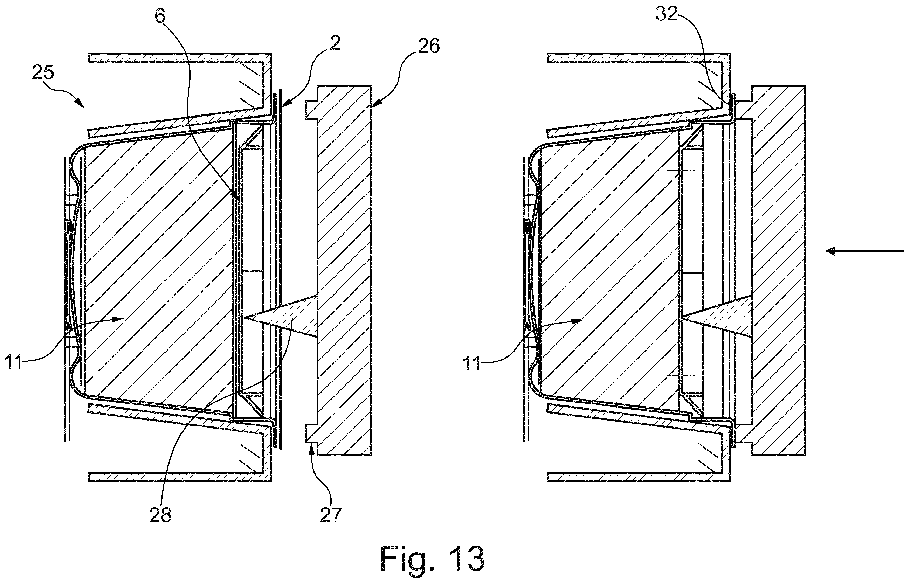

**Figur 13** zeigt das erfindungsgemäße System, das eine Brühkammer 25 aufweist, die in dem vorliegenden Fall, vorzugsweise ortsfest, innerhalb eines Kaffeeautomaten vorgesehen ist. In diese Brühkammer wird die Portionskapsel eingeführt und von dieser zumindest teilweise von dieser aufgenommen und liegt, insbesondere im Bereich ihres Bodens und/oder im Bereich ihrer Kapselwandung 9 an der Brühkammer an. Des Weiteren stützt sich ein Flansch 32, der auf der dem Boden gegenüberliegenden Seite der Portionskapsel vorzugsweise vorgesehen ist, vorzugsweise ebenfalls an der Brühkammer ab. Durch eine in der Brühkammer vorgesehene Öffnung (nicht dargestellt) läuft das fertiggestellte Getränk und/oder Lebensmittel ab. Des Weiteren weist das erfindungsgemäße System einen Brühkolben 26 auf, der vorzugsweise beweglich vorgesehen ist und der die Brühkammer vor dem Einleiten oder beim Einleiten der Flüssigkeit in die Portionskapsel verschließt. Dieser Brühkolben 26 weist in dem vorliegenden Fall vorzugsweise eine Dichtung 27 auf, die in dem vorliegenden Fall als Kreisring vorgesehen ist und die die Portionskapsel, insbesondere deren Flansch, gegen die Brühkammer presst und dadurch die Brühkammer und die Portionskapsel, aber auch die Portionskapsel und den Brühkolben gegeneinander abdichtet, so dass einströmende Flüssigkeit gezwungen ist, durch den Innenraum der Portionskapsel und nicht darum herum zu strömen. Weiterhin ist an dem Brühkolben ein Aufstechmittel 28, hier ein Aufstechdorn, vorgesehen, der die Deckelfolie 2 vor dem Einströmen der Flüssigkeit aufsticht und so eine Eintrittsöffnung für die Flüssigkeit in die Portionskapsel herstellt. Weiterhin ist dieses Aufstechmittel 28 in dem vorliegenden Fall aber so vorgesehen, dass er bei seiner durch den Pfeil dargestellten Bewegung in Richtung der Brühkammer auch in Kontakt mit dem Flüssigkeitsverteiler 6 gelangt und diesen dadurch zumindest abschnittsweise in Richtung des Bodens der Kapsel drückt. Durch diese Bewegungen können z.B. Ungleichverteilungen, beispielsweise Agglomerationen, der Getränke-/Lebensmittelsubstanz innerhalb der Portionskapsel, die beispielsweise beim Transport oder bei der Lagerung der Portionskapsel entstanden sind, wieder ausgeglichen, insbesondere egalisiert, werden. Alternativ oder zusätzlich kann die Getränke-/Lebensmittelsubstanz durch die Bewegung des Flüssigkeitsverteilers 6 vor oder beim Einströmen der Flüssigkeit in die Portionskapsel verdichtet werden.

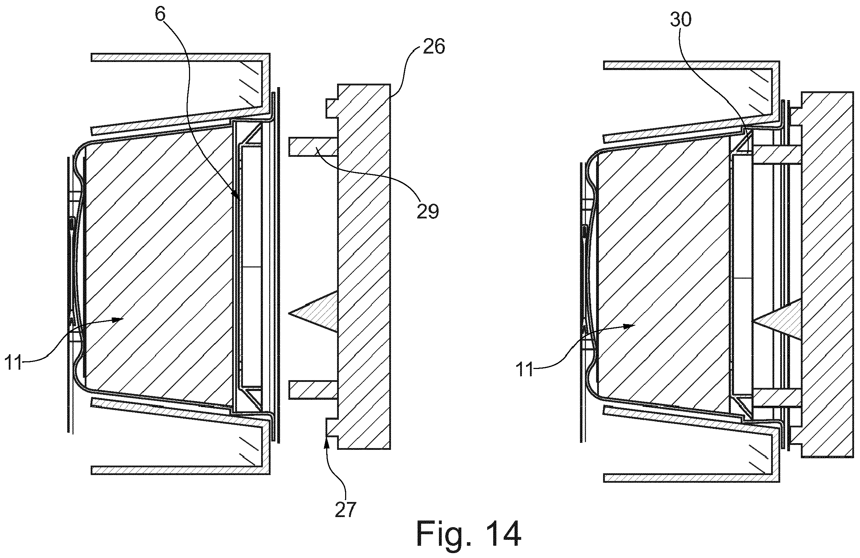

**Figur 14** zeigt eine weitere Ausführungsform des erfindungsgemäßen Systems. Im Wesentlichen kann auf die Ausführungen gemäß Figur 13 Bezug genommen werden, wobei der Brühkolben 26 in dem vorliegenden Fall einen Stempel 29 aufweist, der in dem vorliegenden Fall mit der Seitenwand 30 des Flüssigkeitsverteilers zusammenwirkt, wenn der Brühkolben in Richtung der Brühkammer bewegt wird. In dem vorliegenden Fall hat das Aufstechmittel 28 lediglich die Aufgabe, die Deckelfolie 2 zu perforieren. Die Bewegung des Flüssigkeitsverteilers in Richtung der Getränke-/Lebensmittelsubstanz wird durch den Stempel erzeugt.

Sowohl für die Ausführungsform gemäß Figur 13 als auch für die anderen dargestellten Ausführungsformen des erfindungsgemäßen Systems gilt, dass sich vorzugsweise bei der Bewegung des Flüssigkeitsverteilers die Dichtung 24 so verformt, dass sie die Bewegung des Flüssigkeitsverteilers in Richtung der Getränke-/Lebensmittelsubstanz freigibt.

Vorzugsweise ist der in Figur 14 dargestellte Stempel kreisringförmig vorgesehen, so dass eine gleichmäßige Kraft von dem Brühkolben auf den Flüssigkeitsverteiler, hier die Seitenwand 30 ausgeübt werden kann. Der Fachmann erkennt jedoch, dass der Stempel auch aus mehreren lokalen Segmenten, beispielsweise Stiften, bestehen kann.

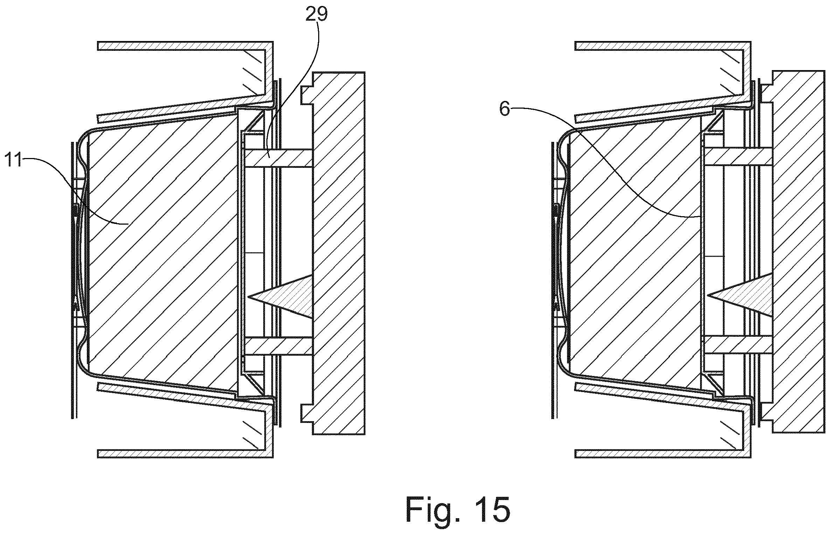

**Figur 15** zeigt im Wesentlichen die Ausführungsform gemäß Figur 14, wobei sich in dem vorliegenden Fall der Stempel nicht an der Seitenwand des Flüssigkeitsverteilers, sondern an der angeströmten Fläche 31 abstützt. Folglich ist der Stempel 29 im Vergleich zu der Ausführungsform gemäß Figur 14 etwas länger ausgeführt. Ansonsten wird Bezug auf die Ausführungen gemäß Figur 13 und 14 genommen. Ein Vergleich zwischen der linken und der rechten Darstellung verdeutlicht wie der Flüssigkeitsverteiler 6 in Richtung der Getränke-/Lebensmittelsubstanz 11 verschoben wird.

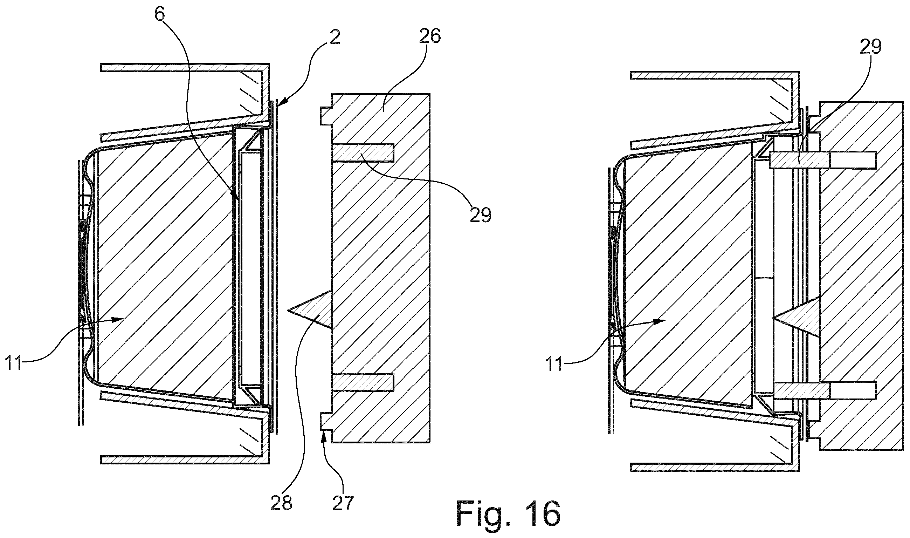

**Figur 16** zeigt eine weitere Ausführungsform des erfindungsgemäßen Systems, wobei im Wesentlichen auf die Ausführungen gemäß Figur 13 bis 15 Bezug genommen werden kann. In dem vorliegenden Fall ist der Stempel 29 beweglich zu dem Brühkolben 26 vorgesehen. Dadurch ist es möglich, die Bewegung des Stempels 29 zumindest teilweise von der Bewegung des Brühkolbens 26 zu entkoppeln. Dadurch kann das Verschieben des Flüssigkeitsverteilers 6 zumindest teilweise unabhängig von dem Anstechen der Deckelfolie 2 erfolgen. Beispielsweise kann der Stempel 29 von dem Druck der einströmenden Flüssigkeit, die zur Herstellung des Getränks bzw. Lebensmittels eingesetzt wird, angetrieben werden. Dadurch ist es möglich, die Kraft des Stempels abhängig von dem Strömungswiderstand der Getränke-/Lebensmittelsubstanz und/oder der Portionskapsel und/oder des erfindungsgemäßen Systems zu gestalten. Beispielsweise: je höher der Strömungswiderstand der Getränke-/Lebensmittelsubstanz ist, desto größer ist auch die Kraft, mit der der Stempel gegen den Flüssigkeitsverteiler drückt und mit der letztendlich die Getränke-/Lebensmittelsubstanz in ihrer Lage verändert, beispielsweise komprimiert, wird.

### Bezugszeichenliste

- 1: Portionskapsel
- 2: Deckel, Deckelfolie
- 3: Kapselkörper
- 4: Filterelement
- 5: Kapselboden
- 6: Flüssigkeitsverteiler
- 7: Flüssigkeitszufuhr, Pfeil
- 8: Getränkeablauf, Pfeil
- 9: Kapselwandung
- 10: Innenraum
- 11: Getränke-/Lebensmittelsubstanz
- 12: Faser- und/oder Fadenmaterial, Faser, Faden
- 13: Ummantelung
- 14: Ausnehmung
- 15: Seitenwand, Seitenwandabschnitt des Flüssigkeitsverteilers
- 16: Grundfläche des Flüssigkeitsverteilers
- 17: Formschlussmittel
- 18: Sollbruchmittel, Reibschlussmittel
- 19: Auflager
- 20: erster Abschnitt, erstes Material
- 21: zweiter Abschnitt, zweites Material
- 22: der Getränke-/Lebensmittelsubstanz zugewandte Seite, Oberfläche
- 23: der Getränke-/Lebensmittelsubstanz abgewandte Seite, Oberfläche
- 24: Dichtung, Dichtlippe
- 25: Brühkammer
- 26: Brühkolben
- 27: Dichtring am Brühkolben
- 28: Aufstechdorn
- 29: Stempel, Verdichtungsring
- 30: Seitenwand, Kraftübertragungsmittel
- 31: von der einströmenden Flüssigkeit angeströmte Fläche des Flüssigkeitsverteilers
- 32: Flansch des Kapselkörpers
- D: Höhe des Flüssigkeitsverteilers

## Patentansprüche

1. Portionskapsel (1) mit einem Kapselkörper (3), dessen Wandung (9) und Boden (5) einen Innenraum (10) begrenzen, in dem eine Getränke-/Lebensmittelsubstanz (11) vorgesehen ist, die durch eine Flüssigkeit, die in die Portionskapsel eingeleitet wird, aufgelöst und/oder extrahiert wird, **dadurch gekennzeichnet, dass** in dem Innenraum, stromabwärts von einer Flüssigkeitszufuhr (7), ein Flüssigkeitsverteiler (6) vorgesehen ist, der die Flüssigkeitszufuhr zumindest teilweise über den Querschnitt der Portionskapsel verteilt und der Flüssigkeitsverteiler (6) eine Grundfläche (16) mit Ausnehmungen (14) aufweist, durch die die Flüssigkeit strömt und dabei verteilt wird und die Grundfläche des Flüssigkeitsverteilers beabstandet vondem Deckel (2) angeordnet ist.

2. Portionskapsel (1) nach Anspruch 1, **dadurch gekennzeichnet, dass** am Umfang der Grundfläche (16) eine Seitenwand oder Seitenwandabschnitte vorgesehen ist/sind, die vorzugsweise parallel zu der Wandung (9) des Kapselkörpers (3) verläuft/verlaufen.

3. Portionskapsel (1) nach Anspruch 2, **dadurch gekennzeichnet, dass** die Seitenwand/der Seitenwandabschnitt der Getränke-/Lebensmittelsubstanz zugewandt oder abgewandt ist.

4. Portionskapsel (1) nach Anspruch 3, **dadurch gekennzeichnet, dass** die Grundfläche des Flüssigkeitsverteilers beabstandet von der Oberfläche der Getränke-/Lebensmittelsubstanz (11) angeordnet ist.

5. Portionskapsel (1) nach Anspruch 3 oder 4, **dadurch gekennzeichnet, dass** der Flüssigkeitsverteiler als Membran vorgesehen ist, die sich beim Einströmen der Flüssigkeit verformt.

6. Portionskapsel (1) nach Anspruch 3 oder 4, **dadurch gekennzeichnet, dass** die Ausnehmungen (14) auf der Grundfläche ungleichmäßig verteilt sind und einen konstanten Durchmesser aufweisen.

7. Portionskapsel (1) nach Anspruch 3 oder 4, **dadurch gekennzeichnet, dass** die Höhe (D) des Flüssigkeitsverteilers so vorgesehen ist, dass er den Raum zwischen der Getränke-/Lebensmittelsubstanz (11) und dem Deckel (2) ausfüllt.

8. Portionskapsel (1) nach Anspruch 3 oder 4, **dadurch gekennzeichnet, dass** der Flüssigkeitsverteiler durch Kleben stoffschlüssig mit dem Kapselkörper (3) verbunden ist.

9. Portionskapsel nach einem der voranstehenden Ansprüche, **dadurch gekennzeichnet, dass** mehrere Öffnungen, die sich in dem Deckel 2, insbesondere einer Deckelfolie 2 befinden, die Flüssigkeit vorverteilen.
